# EUROPÄISCHE PATENTSCHRIFT

(11) **EP 0 653 251 B1**
(45) Veröffentlichungstag und Bekanntmachung des Hinweises auf die Patenterteilung: **02.01.1997**
(21) Anmeldenummer: 94116050.9
(22) Anmeldetag: 12.10.1994
(51) Int. Cl.: B09B 3/00

(54) **Anlage zum Zerlegen und sortenreinen Trennen von zu entsorgenden, im wesentlichen aus metallischen Hohlkörpern oder Hohlkörperteilen bestehenden Altgeräten**
Device for dissecting, grading, separating and disposing of scrap device, essentially consisting of metallic hollow products or parts of them
Installation pour démonter et classer suivant le matériau des appareils à éliminer, les dits appareils consistant essentiellement en corps creux métalliques ou en parties de corps creux

(30) Priorität: 17.11.1993 DE 4339148
(43) Veröffentlichungstag der Anmeldung: 17.05.1995
(73) Patentinhaber: VIESSMANN WERKE GmbH & CO., 35107 Allendorf/Eder (DE)
(72) Erfinder: Schmidt, Harald, D-34477 Twistetal (DE); Burger, Helmut, Prof. Dr.-Ing., D-35216 Biedenkopf-Kombach (DE); Pfeil, Emanuel, Prof. Dr., D-35037 Marburg-Ockershausen (DE)
(74) Vertreter: Wolf, Günter, Dipl.-Ing.

(56) Entgegenhaltungen:
- EP-A- 0 429 031
- EP-A- 0 442 113
- EP-A- 0 565 032
- EP-A- 0 566 172

## Beschreibung

Die Erfindung betrifft eine Anlage zum Zerlegen und sortenreinen Trennen von zu entsorgenden, im wesentlichen aus metallischen Hohlkörpern oder Hohlkörperteilen bestehenden Altgeräten, insbesondere Heizkessel, Brauchwasserbehälter o. dgl. wärmetechnische Geräte.

Die Entsorgungs- und Deponieproblematik für Abfälle jedweder Art ist allgemein bekannt und hat sich für die Hersteller zu entsorgender Produkte insoweit verschärft, als diese, sofern nicht andere Entsorgungsregelungen bestehen, entsorgungsbedürftige Produkte Zurücknehmen und für eine sachgerechte Entsorgung sorgen müssen. Dieses Problem kommt auch auf Hersteller von Produkten der eingangs genannten Art zu bzw. besteht bereits, wobei zu beachten ist, daß derartige Produkte in der Regel aus mehreren unterschiedlichen metallischen Komponenten bestehen, deren Erhalt zwecks Wiederverarbeitung durchaus von Interesse ist. Problematisch ist dabei zudem, daß zu entsorgende Geräte bzw. Gerätschaften bspw. durch Dichtungsmittel, Isolierungen od. dgl. mit Fremdstoffen belastet sind, die an sich einer Sonderentsorgung bedürfen. Dies gilt bspw. und insbesondere auch für Heizkessel und einschlägige wärmetechnische Geräte, wie Brauchwasserbehälter, Wärmetauscher od. dgl.
Heizkessel sind dabei insoweit problematisch, als diese im Laufe der jahrzehntelangen Entwicklung immer differenzierter in Konstruktion und hinsichtlich Materialauswahl ausgebildet worden sind, so daß ein Heizkessel in Kombination die unterschiedlichsten Metallkomponenten enthält (bspw. Blech-, Grauguß-, Aluminium-, Kupferteile) einschließlich nichtmetallischer Komponenten, wie die erwähnten Dichtungsmittel oder der Wärmeleitung förderliche oder diese mindernden nichtmetallischen Stoffe.
Es böte sich an, um bei Heizkesseln zu bleiben, deren Gehäuse nach Entfernung aller leicht demontierbaren Teile, wie Brenner, Kesselverschlußtüren, Außengehäuse und Wärmeisolierung, einfach durch Trennschweißen in kleinere Zuschnitte zu zerlegen, wobei es aber, abgesehen vom erforderlichen Einsatz relativ teurer Schweißgase, praktisch unvermeidbar ist, daß gasförmige Schadstoffe insbesondere auch durch die Mitverbrennung von nichtmetallischen Komponenten entstehen.

Der Erfindung liegt demgemäß die Aufgabe zugrunde, eine Anlage für den eingangs genannten Zweck zu schaffen, mit der nicht nur die Aufarbeitung von Altgeräten möglichst rationell und weitgehend automatisch erfolgen kann, sondern auch umweltschonend, verbunden mit der Maßgabe, daß das Betriebsmittel zum Trennen bzw. Zerlegen der metallischen Komponenten zumindest weitestgehend im Kreislauf verwendet werden kann.

Diese Aufgabe ist nach der Erfindung mit einer Anlage gelöst, gebildet aus einer Altgeräte-Auflagefläche mit unterhalb deren Ebene angeordnetem Wassersammler und mindestens ein oberhalb der Auflagefläche angeordnetes, in mehreren Freiheitsgraden beweglich steuerbares Wasserstrahlschneidgerät, wobei der Auflagefläche eine Altgerätezufördereinrichtung und eine zu einer Sortiereinrichtung führende Trennteileabförderungseinrichtung zugeordnet sind und eine mit dem Wassersammler leitungsverbundene Abwasser-Aufbereitungseinrichtung, deren Reinwasserabgang mit dem Wasserstrahlschneidgerät verbunden ist.

Mit einer solchen Anlage sind die gestellten Forderungen erfüllt, und zwar insbesondere das wesentliche Anliegen einer umweltschonenden Aufarbeitung durch den Einsatz von Wasser, das nicht nur zum Zerlegen der Hohlkörper dient, sondern gleichzeitig auch zum Abtransport von beim Zerlegen freiwerdenden nichtmetallischen Feststoffen bzw. auch festen Schadstoffen, die auch beim Zerlegen durch den beim Wasserstrahlschneiden entstehenden Wassernebel gebunden und mit diesem niederschlagen werden.
Auch die Forderung nach einer weitestgehenden Automation, die den Einsatz von Bedienungspersonen zumindest im unmittelbaren Trenn- bzw. Zerlegungsbereich entbehrlich macht, ist genügt, da die schnittgerechte Führung des Wasserstrahlschneidgerätes gesteuert erfolgt, was noch näher erläutert wird, und zwar insbesondere hinsichtlich einer programmgesteuerten Führungsvorgabe in Abhängigkeit vom jeweiligen Typ des zu zerlegenden Altgerätes.

Vorteilhafte Ausgestaltungen der Anlage bestehen in Folgendem:
Die Alteräte-Auflagefläche ist als den Wassersammler nach oben abschließendes Auflagerost ausgebildet, d.h., das vom Wasserstrahlschneidgerät anfallenden Wasser fällt auf direktem Wege in den Sammler. Im Bereich der Altgeräte-Auflagefläche ist mindestens ein Altgeräte-Stellungssensor angeordnet, mit dem ohne zusätzliche Eingriffsmaßnahmen sichergestellt wird, daß das zu zerlegende Altgerät nicht nur die richtige Stellung zum Schneidgerät erreicht hat, sondern damit auch eine Bezugsstellung für die Steuerung des Schneidgerätes gegeben ist, wobei der/die Antrieb/e der Führungsmechanik des mindestens einen Wasserstrahlschneidgerätes mit einer Programmsteuerung steuerbar ausgebildet ist/sind, d.h., das ganze Wasserstrahlschneidgerät ist praktisch ein steuerbarer Roboterarm, an dessen Enden die Schneidstrahldüse sitzt.
Um das ganze Ambiente um den eigentlichen Zerlegungsbereich nicht dem Wassernebel auszusetzen und auch aus Sicherheitsgründen (derartige Schneidgeräte arbeiten mit extrem hohem Strahldruck), ist zumindest ab Ebene der Auflagefläche diese und das oberhalb dieser angeordnete mindestens eine Wasserstrahlschneidgerät mit einem mit Altgeräteinlaßöffnung und Trennteileauslaßöffnung versehene Umschließungsgehäuse umgeben, an dem die Öffnungen mit Durchlaßabschirmungen versehen sind.
Um ferner auch die Zu- und Abförderung so vorteilhaft wie möglich zu gestalten, ist der Auflagerost als Endlosförderer ausgebildet und dieser als Teil der Altgerätezuförder- und/oder der Trennteileabfördereinrichtung, wobei vorteilhaft, noch einen Schritt weitergehend, der Auflagerost und die Altgerätezuförder- und Trennteileabfördereinrichtung gemeinsam als eine Umlaufbahn ausgebildet sein können.

Die zur Anlage gehörende Abwasseraufbereitungseinrichtung ist aus einem Wassersammel- und Feststoffabsatzbehälter mit Feststoffableitung und Zuleitung zu einem Öl- und Fettabscheider gebildet, an den eine zum mindestens einen Wasserstrahlschneidgerät führende Leitung angeschlossen ist. Schließlich ist hinter der Feststoffableitung eine Feststoffpresseinrichtung mit Wasserablauf angeordnet, wobei auch dieser Wasserablauf zweckmäßig an den Wasserkreislauf anzuschließen ist.

Die erfindungsgemäße Anlage wird nachfolgend anhand von Ausführungsbeispielen näher erläutert.

Es zeigt schematisch
- Fig. 1: ein Anlagenschema;
- Fig. 2: perspektivisch eine Ausführungsform der Anlage;
- Fig. 3: eine andere Ausführungsform des Wassersammlers und
- Fig. 4: die Abwasseraufbereitungseinrichtung.

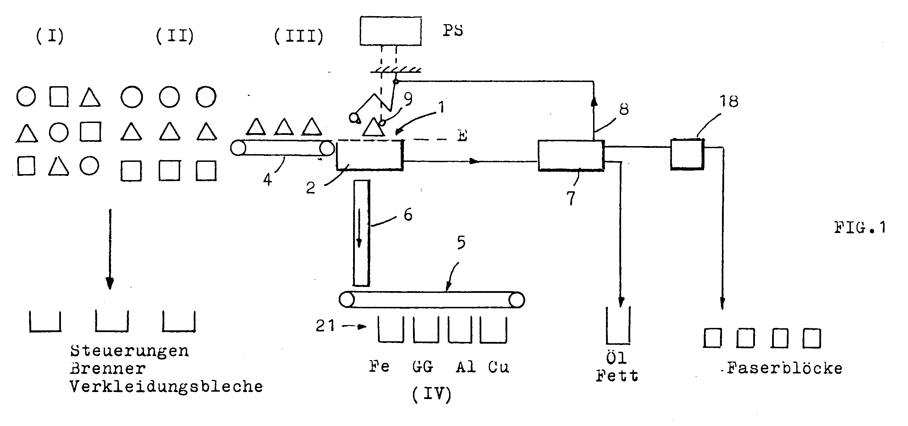

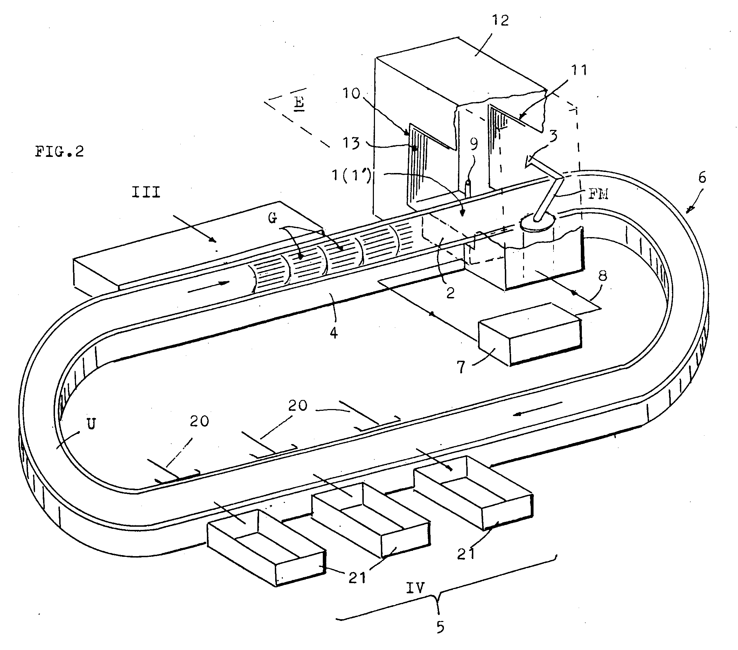

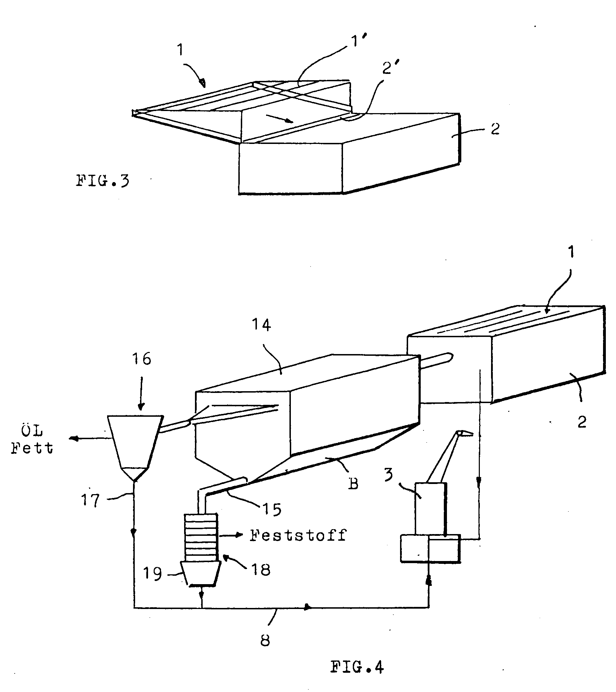

Orientiert zunächst an Fig. 1 ist das "Herzstück" der Anlage die Altgeräte-Auflagefläche 1 mit unterhalb deren Ebene E angeordnetem Wassersammler 2 und mindestens ein oberhalb der Auflagefläche 1 angeordnetes, in mehreren Freiheitsgraden beweglich steuerbares Wasserstrahlschneidgerät 3. Der Auflagefläche 1 sind eine Altgerätezufördereinrichtung 4 und eine zu einer Sortiereinrichtung 5 führende Trennteileabfördereinrichtung 6 zugeordnet. Mit dem Wassersammler 2 ist eine Abwasser-Aufbereitungseinrichtung 7 verbunden, deren Reinwasserabgang 8 wiederum mit dem Wasserstrahlschneidgerät 3 verbunden ist. Die Altgeräte-Auflagefläche 1 und der Wassersammler 2 können auch, wie in Fig. 3 dargestellt, ausgebildet sein, wobei der Sammelrbehälter nach oben verschlossen sein kann, da sich die als Rost 1' ausgebildete Auflagefläche 1 neben diesem befindet. Das vom Schneidgerät ausgedüste Schneidwasser läuft durch einen Schlitz 2' in den Sammler 2. Eine praktische Ausführungsform einer Anlage ist perspektivisch in Fig. 2 verdeutlicht, wobei der Auflagerost 1' als Endlosförderer ausgebildet und dieser Teil der Altgerätezuförder- und der Trennteileabfördereinrichtung 4, 5 ist, die also in diesem Fall gemeinsam eine in sich geschlossene Umlaufbahn U bilden. Solche ebenflächigen Umlauffördereinrichtungen sind an sich bekannt (siehe bspw. Flughafen-Gepäckausliefereinrichtungen). Die einzelnen Förderglieder G sollten hierbei allerdings als Roste oder als gelochte Elemente ausgebildet sein. Wie ebenfalls aus Fig. 2 ersichtlich, ist zumindest ab Ebene E der Auflagefläche 1 diese und das oberhalb dieser angeordnete mindestens eine Wasserstrahlschneidgerät 3 mit einem mit Altgeräteeinlaßöffnung 10 und Trennteileauslaßöffnung 11 versehenen Umschließungsgehäuse 12 umgeben, an dem die Öffnungen 10, 111 mit Durchlaßabschirmungen 13 versehen sind. Sofern der Behälter des Wassersammlers 2 nicht unmittelbar selbst als Feststoffabsetzbehälter ausgenutzt wird, wobei der Behälter entsprechend groß auszubilden ist und im Draufsichtsquerschnitt wesentlich größer sein kann als die Altgeräte-Auflagefläche 1, wird, wie in Fig. 1, 2 dargestellt, ein separater Wassersammel- und Feststoffabsetzbehälter 14 vorgesehen, der mit dem Wassersammler 2 durch eine Leitung verbunden ist. In Höhe Wasserstandsniveau ist eine Zuleitung zu einem Öl- und Fettabscheider 16 am Feststoffabsetzbehälter 14 angeschlossen, wobei als Öl- und Fettabscheider 16 bspw. ein Flüssigkeitsseparator geeigneter und bekannter Art verwendet wird.
Separiertes Reinwasser kann dem Wasserkreislauf des Wasserstrahl-Schneidgerätes 3 wieder zugeführt werden. Der Boden B des Feststoffabsetzbehälters 14 ist zweckmäßig geneigt ausgebildet, wobei dann an der tiefsten Stelle die Feststoffableitung 15 angeschlossen ist, die zu einer Feststoffpresseinrichtung 18 führt, wofür ebenfalls bekannte, aber erforderlichenfalls an die besondere Gegebenheit angepaßte Pressen zur Verfügung stehen. Das hierbei abgepreßte Reinwasser kann ebenfalls dem Wasserkreislauf des Schneidgerätes 3 wieder zugeführt werden. Die für alle Wasserumlaufförderungen erforderlichen Pumpen sind nicht dargestellt. Fig. 4 verdeutlicht schematisch die Abwasseraufbereitungseinrichtung 7 mit ihren Einzelelementen.

Die Behandlung von Altgeräten sei am Beispiel von Heizkesseln erläutert.
Zurückgegebene Altkessel werden je nach Anfall ggf. zwischengelagert (F) und nach Typen sortiert (II), wonach dann die Typenchargen (III) der Anlage via Zufördereinrichtung 4 zugefördert werden. Für diese Typencharge liegt ein entsprechendes Schnittführungsprogramm in der Schneidgeräteführungsmechanik vor, d.h., eine CNC-Steuerung erfolgt über die in den jeweiligen Demontageanweisungen für diesen Typ festgelegten Schnittverläufen. Die Schnitte werden so gewählt, daß jeweils sortenreine Bauteile bzw. Baugruppen mit verträglichen Werkstoffen, entsprechend den Weiterverwertungs-Vorgaben, abgetrennt werden.

Um für die Bewegungssteuerung einen fixen Ausgangspunkt zu haben, ist im Schneidbereich zweckmäßig ein Stellungssensor 9 (siehe Fig. 1, 2) angeordnet, der, wenn der Kessel diesen Sensor erreicht, das Transportelement anhält. Mit Rücksicht auf vorzunehmende Flächenreinigungen sind neben dem eigentlichen Schneidgerät noch ein oder mehrere Flächenbearbeitungsstrahlköpfe mit eigener Bewegungsmechanik ebenfalls mit im Umschließungsgehäuse 12 angeordnet (nicht dargestellt).

Bei evtl. nicht typengeordneter Zuführung verschiedener Kesseltypen können diese mit Hilfe von Sensoren identifiziert und anhand der programmierten Schnittführung zerlegt werden. Bei unbekannten Kesseltypen werden die Schnittverläufe zunächst per Hand gesteuert und dabei gleichzeitig programmiert, um dann im Bedarfsfall wieder auf diese Programmierung zurückgreifen zu können. Die Zerstörung von Dichtungen, die Entfernung von Oberflächenbeschichtungen bzw. anhaftenden Fremdstoffen wird vorrangig durchgeführt. Die Zerlegung erfolgt dann jeweils im nachfolgenden Schnitt, wobei die Schnittführung möglichst so programmiert ist, daß bspw. verdeckt liegende Dichtungen dabei zerstört werden.
Fasern, bspw. Asbestfasern, werden zunächst im Sink-Schwimm-Verfahren abgeschieden und dann in der Presse 18 ggf. unter Zugabe eines Bindemittels zu Blöcken verpreßt. Die Trennung von Ölen und Fetten erfolgt mit Hilfe von Separatoren, wobei der verbleibende Wasseranteil in nachgeschalteten Zentrifugen abgeschieden und, wie erwähnt, wieder in den Kreislauf zurückgeleitet wird.
Die gewissermaßen ebenfalls programmiert auseinanderfallenden Trennteile werden, wenn die Auflagefläche 1 nicht Teil eines Endlosförderers ist, über eine Rutsche einem Transportband zugeführt und durch programmgesteuerte Auswerfer in die entsprechenden Container 19 gestoßen (IV in Fig. 1).

Bei einem Endlosförderer gemäß Ausführungsbeispiel nach Fig. 2 erfolgt dieses entsprechend mit Auswerfern 20 im Bereich IV des Endlosförderers, sofern dies in beiden Fällen nicht von Bedienungspersonen erfolgt, was letztlich auch möglich ist. Für den Sortiervorgang ist genügend Zeit verfügbar, da sich der Endlosförderer im Takt bewegt und immer erst dann weiterrückt, wenn ein Kessel zerlegt ist.

## Patentansprüche

1. Anlage zum Zerlegen und sortenreinen Trennen von zu entsorgenden, im wesentlichen aus Hohlkörpern oder Hohlkörperteilen bestehenden Altgeräten, insbesondere Heizkessel, Brauchwasserbehälter od. dgl. wärmetechnische Geräte,
**gekennzeichnet durch**
eine Altgeräte-Auflagefläche (1) mit unterhalb deren Ebene (E) angeordnetem Wassersammler (2) und mindestens ein oberhalb der Auflagefläche (1) angeordnetes, in mehreren Freiheitsgraden beweglich steuerbares Wasserstrahlschneidgerät (3), wobei der Auflagefläche (1) eine Altgerätezufördereinrichtung (4) und eine zu einer Sortiereinrichtung (5) führende Trennteileabfördereinrichtung (6) zugeordnet sind und eine mit dem Wassersammler (2) leitungsverbundene Abwasser-Aufbereitungseinrichtung (7), deren Reinwasserabgang (8) mit dem Wasserstrahlschneidgerät (3) verbunden ist.

2. Anlage nach Anspruch 1,
**dadurch gekennzeichnet,**
daß die Altgeräte-Auflagefläche (1) als den Wassersammler (2) nach oben abschließender Auflagerost (1') ausgebildet ist.

3. Anlage nach Anspruch 1 oder 2,
**dadurch gekennzeichnet,**
daß im Bereich der Altgeräte-Auflagefläche (1) mindestens ein Altgeräte-Stellungssensor (9) angeordnet ist.

4. Anlage nach einem der Ansprüche 1 bis 3,
**dadurch gekennzeichnet,**
daß der/die Antrieb/e der Führungsmechanik (FM) des mindestens einen Wasserstrahlschneidgerätes (3) mit einer Programmsteuerung (PS) steuerbar ausgebildet ist/sind.

5. Anlage nach einem der Ansprüche 1 bis 4,
**dadurch gekennzeichnet,**
daß zumindest ab Ebene (E) der Auflagefläche (1) diese und das oberhalb dieser angeordnete mindestens eine Wasserstrahlschneidgerät (3) mit einem mit Altgeräteeinlaßöffnung (10) und Trennteileauslaßöffnung (11) versehenen Umschließungsgehäuse (12) umgeben ist, an dem die Öffnungen (10, 11) mit Durchlaßabschirmungen (13) versehen sind.

6. Anlage nach einem der Ansprüche 1 bis 5,
**dadurch gekennzeichnet,**
daß der Auflagerost (1') als Endlosförderer ausgebildet und dieser Teil der Altgerätezuförder- und/oder Trennteileabfördereinrichtungen (4, 5) ist.

7. Anlage nach Anspruch 6,
**dadurch gekennzeichnet,**
daß der Auflagerost (1') und die Altgerätezuförder- (4) und Trennteileabfördereinrichtung (5) gemeinsam als eine Umlaufbahn (U) ausgebildet sind.

8. Anlage nach einem der Ansprüche 1 bis 7,
**dadurch gekennzeichnet,**
daß die Abwasseraufbereitungseinrichtung (7) aus einem Wassersammel- und Feststoffabsetzbehälter (14) mit Feststoffableitung (15) und Zuleitung zu einem Öl- und Fettabscheider (16) gebildet ist, an den eine zum mindestens einen Wasserstrahlabscheidgerät (3) führende Leitung (17) angeschlossen ist.

9. Anlage nach Anspruch 8,
**dadurch gekennzeichnet,**
daß hinter der Feststoffableitung (15) eine Feststoffpresseinrichtung (18) mit Wasserablauf (19) angeordnet ist.

## Claims

1. A system for the decomposition and unadulterated separation of used devices to be discharged, in particular, boilers, process-water tanks or the like heating means, substantially consisting of hollow bodies or parts thereof, characterized by a bearing surface (1) for accommodating used devices with a water collecting tank (2) arranged underneath the plane (E) thereof, and at least one water-jet cutter (3) movably controllable in several degrees of freedom and arranged above the bearing surface (1), with a means for feeding the used devices (4) and a means for discharging the separated parts (6) leading to a sorting means (5) and a waste-water purifying means (7) connected through a conduit to the water collecting tank (2) being associated to the bearing surface (1), with the clear water discharge (8) of the said purifying means (7) being connected to the water-jet cutter (3).

2. A system according to claim 1,
characterized in that the bearing surface (1) for accommodating the used devices is designed as a bearing grid (1) upwardly closing the water collecting tank (2).

3. A system according to claims 1 or 2,
characterized in that arranged in the area of the bearing surface (1) accommodating the used devices is at least one sensor (9) for positioning the used devices.

4. A system according to any one of claims 1 to 3, characterized in that the drive(s) of the guiding mechanism (FM) of the at least one water-jet cutter (3) is (are) designed to be controllable by a program control.

5. A system according to any one of claims 1 to 4,
characterized in that the bearing face (1) at least from the plane thereof and the at least one water cutter (3) arranged above the bearing surface (1) are surrounded by an enclosure housing (12) provided with an inlet opening (10) for admitting the used devices and an outlet opening (11) for discharging the separated parts, with the said openings (10,11) on the housing (12) being provided with passage screens (13).

6. A system according to any one of claims 1 to 5, characterized in that the bearing grid (1') is in the form of an endless conveyor which, in turn, is part of the means (4,5) for supplying used device and/or discharging separated parts.

7. A system according to claim 6, characterized in that the bearing grid (1') and the means (4) for supplying used devices and the means for discharging separated parts (5) are jointly designed as a rotating path (U).

8. A system according to any one of claims 1 to 7, characterized in that the waste-water purifying means (7) is formed of a water collecting and solids settling tank (14) provided with a solids discharge (15) and a feeder leading to an oil and grease separator (16) to which is connected a conduit (17) leading to at least one water-jet separator (13).

9. A system according to claim 8,
characterized in that arranged behind the solids discharge (15) is a solids compressing means (18) provided with a water discharge (19).

## Revendications

1. Installation pour démonter et séparer type par type des vieux appareils à éliminer, constitués essentiellement par des corps creux ou des pièces en corps creux, en particulier des chaudières de chauffage, des réservoirs d'eau non potable ou des appareils de technique thermique similaires,
**caractérisée par**
une surface d'appui pour vieux appareils (1) avec un collecteur d'eau (2) placé au-dessous de son plan et au moins un appareil de coupe au jet d'eau (3) placé au-dessus de la surface d'appui (1), qui peut être commandé mobile dans plusieurs degrés de liberté, un dispositif d'amenée de vieux appareils (4) et un dispositif d'évacuation des pièces séparées (6) qui mène à un dispositif de tri (5) correspondant à la surface d'appui (1), et un dispositif de traitement des eaux usées (7) relié par des tuyauteries au collecteur d'eau (2), dont la sortie d'eau pure (8) est reliée à l'appareil de coupe au jet d'eau (3).

2. Installation selon la revendication 1,
**caracterisée en ce**
que la surface d'appui des vieux appareils (1) est configurée comme grille d'appui (1') terminant le collecteur d'eau (2) vers le haut.

3. Installation selon la revendication 1 ou 2,
**caractérisée en ce**
qu'au moins un détecteur de position (9) de vieux appareils est placé dans la zone de la surface d'appui (1) des vieux appareils.

4. Installation selon l'une des revendications 1 à 3,
**caractérisée en ce**
que l'entraînement/les entraînements du mécanisme de guidage (FM) de l'appareil de coupe au jet d'eau (3) qui existe au moins est/sont configuré(s) en pouvant être commandé(s) avec une commande de programme (PS).

5. Installation selon l'une des revendications 1 à 4,
**caractérisée en ce**
qu'au moins à partir du plan (E) de la surface d'appui (1) celle-ci et l'appareil de coupe au jet d'eau (3) qui existe au moins et qui est placé au-dessus de celle-ci est entouré d'un bâti d'entourage (12) pourvu d'une ouverture d'entrée des vieux appareils (10) et d'une ouverture de sortie des pièces séparées (11), bâti sur lequel les ouvertures (10, 11) sont pourvues de protections de passage (13).

6. Installation selon l'une des revendications 1 à 5,
**caractérisée en ce**
que la grille d'appui (1') est configurée comme un transporteur sans fin et que celui-ci est une partie des dispositifs d'amenée des vieux appareils et/ou d'évacuation des pièces séparées (4, 5).

7. Installation selon la revendication 6,
**caractérisée en ce**
que la grille d'appui (1') et le dispositif d'amenée des vieux appareils et/ou d'évacuation des pièces séparées (4, 5) sont configurés ensemble comme une trajectoire circulaire (U).

8. Installation selon l'une des revendications 1 à 7,
**caractérisée en ce**
que le dispositif de traitement des eaux usées (7) est formé par un réservoir collecteur d'eau et de dépôt de matières solides (14) avec évacuation des matières solides (15) et amenée à un séparateur d'huile et de graisse (16) auquel une tuyauterie (17) qui mène à l'appareil de coupe au jet d'eau (3) qui existe au moins est raccordée.

9. Installation selon la revendication 8,
**caractérisée en ce**
qu'un dispositif de presse de matières solides (18) avec une évacuation d'eau (19) est placé derrière l'évacuation des matières solides (15).
